# EUROPÄISCHE PATENTSCHRIFT

(11) **EP 0 532 945 B1**
(45) Veröffentlichungstag und Bekanntmachung des Hinweises auf die Patenterteilung: **02.01.1997**
(21) Anmeldenummer: 92114541.3
(22) Anmeldetag: 26.08.1992
(51) Int. Cl.: F16J 13/12

(54) **Druckbehälter**
Pressure tank
Réservoir sous pression

(30) Priorität: 20.09.1991 DE 9111793 U
(43) Veröffentlichungstag der Anmeldung: 24.03.1993
(73) Patentinhaber: THERA Patent GmbH & Co. KG Gesellschaft für industrielle Schutzrechte, D-82229 Seefeld (DE)
(72) Erfinder: Kind, Sabine, W-8089 Emmering (DE); Koran, Peter Dr., W-8120 Weilheim (DE); Herold, Wolf-Dietrich Dr., W-8031 Seefeld 2 (DE)
(74) Vertreter: Strehl Schübel-Hopf Groening & Partner

(56) Entgegenhaltungen:
- EP-A- 0 075 397
- DE-A- 2 753 084
- DE-A- 3 121 339
- DE-B- 2 917 149
- DE-U- 6 807 650
- US-A- 3 086 675

## Beschreibung

Druckbehälter kommen in den verschiedensten technischen Bereichen zum Einsatz. Sie bestehen meistens aus metallischen Werkstoffen und können mit Gas oder Flüssigkeit beaufschlagt werden. In typischen Anwendungsfällen dienen derartige Druckbehälter dazu, mit Hilfe zugeführter Druckluft eine Flüssigkeit, etwa einen flüssigen Klebstoff, aus einem in den Druckbehälter eingesetzten Gefäß über eine Zuführleitung an einen Verarbeitungsort zu fördern.

Ein typischer herkömmlicher Druckbehälter ist in DE-C-3 116 961 offenbart. Dieser für eine Entwässerungsvorrichtung für Wäschereianlagen bestimmte Behälter weist am oberen Rand einen Flansch auf, in den eine die Behälteröffnung vollständig umgebender Dichtungsring eingesetzt ist. Der Behälter wird durch einen Druckdeckel mit einem unteren Flansch geschlossen, wobei die beiden Flansche von achtzehn Gewindebolzen durchsetzt werden, die gleichmäßig über den Umfang verteilt sind. Durch Anziehen der Bolzen soll ein gleichmäßiger Schließdruck sichergestellt werden.

Das Öffnen und Schließen des bekannten Druckbehälters ist zeitaufwendig, da sämtliche Bolzen einzeln von Hand betätigt werden müssen. Da ferner in der Praxis die einzelnen Bolzen mit unterschiedlichen Drehmomenten angezogen werden, kommt es zu Verspannungen des Deckels und möglicherweise zu Undichtigkeiten.

Aus AT-B-298 427 ist ein Druckbehälter bekannt, bei dem der Behälterinnendruck selbst zur Erzeugung der Dichtkraft herangezogen wird. Dazu weist das am Deckel angeordnete Dichtungselement eine in Radialrichtung über die Dichtungsstelle hinausgehende wirksame Fläche auf, so daß der Behälterinnendruck an dem Dichtungselement eine Druckdifferenz erzeugt, die dieses mit gleichmäßiger Dichtkraft gegen den Gefäßrand drückt. Der Deckel wird gegenüber dem Gefäß durch einen Bajonettverschluß arretiert, der ein rasches Öffnen und Schließen ermöglicht. Da beim Öffnen und Schließen die Druckzufuhr abgeschaltet ist, läßt sich der Deckel ohne Kraftaufwand auf das Gefäß auflegen bzw. von diesem abnehmen. Der Bajonettverschluß ist ferner so gestaltet, daß er zwei unterschiedliche Stellungen des Deckels gegenüber dem Gefäß ermöglicht, wobei der Dekkel in der einen Stellung dicht geschlossen arretiert ist und in der anderen Stellung ein langsames Entweichen des Druckmediums gestattet, um eine schlagartige Änderung der Druckverhältnisse im Behälter zu verhindern.

Ein Druckbehälter mit den im ersten Teil des Anspruchs 1 angegebenen Merkmalen ist aus DE-A-2 753 084 bekannt. Dort ist am Verschlußdeckel eine umlaufende Lippendichtung vorgesehen, die mit dem stationären oberen Rand des Gefäßes zusammenarbeitet. Der Dichtungsdruck wird dabei allein vom Schließmechanismus bestimmt. Er ist vom Behälterinnendruck unabhängig. Da die beiden Dichtungsteile starr mit Deckel bzw. Gefäß verbunden sind, wird die Dichtung in trivialer Weise stets geöffnet, wenn der Deckel angehoben wird. Dabei kann im Gegensatz zu dem Druckbehälter nach AT-B-298 427 von einer "Zwangsöffnung" im strengen Sinne nicht gesprochen werden.

Der Erfindung liegt die Aufgabe zugrunde, einen Druckbehälter anzugeben, der bei einfacher Handhabung dennoch eine hohe Betriebssicherheit gewährleistet.

Die erfindungsgemäße Lösung dieser Aufgabe ist im Anspruch 1 gekennzeichnet. Danach wird die Betriebssicherheit insofern erhöht, als der Deckel dann, wenn er beim Schließen nicht vollständig bis zum Anschlag gedreht wird und daher bei Druckbeaufschlagung des Behälters um ein gewisses Maß angehoben wird, die Dichtung zwangsläufig geöffnet wird und die Druckluft sofort entweicht. Dadurch wird vermieden, daß der Deckel etwa erst nach erheblichem Druckaufbau plötzlich abhebt und von dem Gefäß weggeschleudert wird.

Die Ausgestaltungen der Erfindung nach den Ansprüchen 2 und 3 bringen die Vorteile mit sich, daß die beiden Schließstellungen des Deckels genau definiert werden und Zwischenstellungen, wie sie sich bei unachtsamer Handhabung ergeben, durch den sich aufbauenden Innendruck des Behälters automatisch beseitigt werden.

Anspruch 4 bezieht sich auf eine besonders einfach ausgebildete Maßnahme, um zu gewährleisten, daß die Dichtung beim Abheben des Deckels zwangsläufig gelöst wird.

Drei bevorzugte Ausgestaltungen der bei dem erfindungsgemäßen Druckbehälter anwendbaren Dichtanordnung sind in den Unteransprüchen 5 bis 8 gekennzeichnet.

Die Weiterbildung der Erfindung nach Anspruch 9 hat den Vorteil, daß sich insbesondere dann, wenn die Öffnung in dem Ringelement nicht allzu groß ist, bei Druckbeaufschlagung des Behälters der Druck zunächst an der von dem Dichtungsring abgewandten Fläche des Ringelements aufbaut und dadurch der Druckbehälter sofort dicht wird.

Bevorzugte Ausführungsbeispiele der Erfindung werden nachstehend anhand der Zeichnungen näher erläutert. Darin zeigt
- Figur 1: einen schematischen Längsschnitt durch einen Druckbehälter mit einer Dichtanordnung gemäß einem ersten Ausführungsbeispiel,
- Figur 2: eine schematische Seitenansicht der bei dem Druckbehälter nach Figur 1 verwendeten Arretiereinrichtung, und
- Figur 3 und 4: teilweise Längsschnitte durch zwei weitere Ausführungsbeispiele der Dichtanordnung.

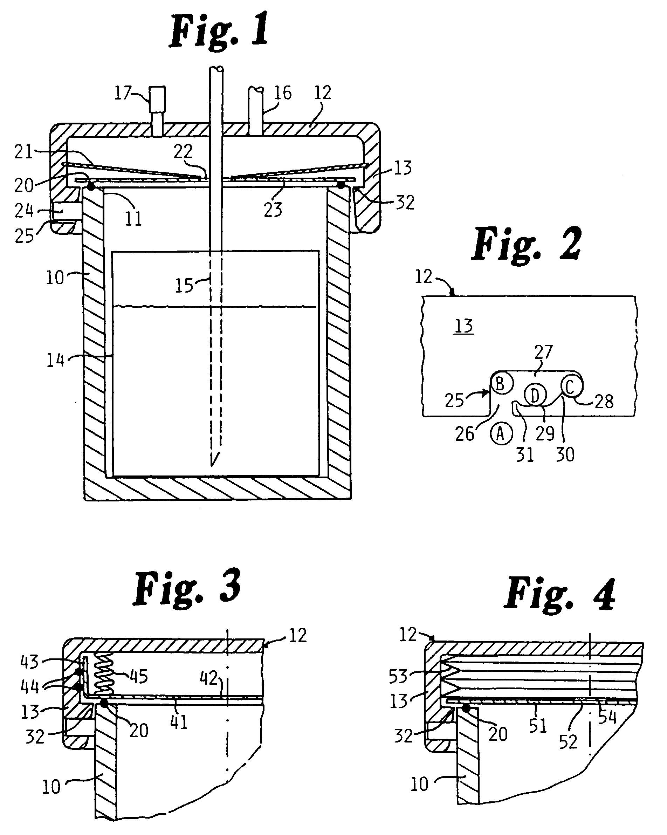

Der in Figur 1 gezeigte Druckbehälter besteht aus einem kreiszylindrischen Gefäß 10 und einem dessen obere Öffnung 11 verschließenden Deckel 12, der mit einem nach unten ragenden Flansch 13 die Außenwand des Gefäßes 10 umgreift.

In dem Gefäß 10 befindet sich ein Innengefäß 14 zur Aufnahme beispielsweise eines Klebstoffs oder einer sonstigen auszubringenden Flüssigkeit. In das Innengefäß 14 taucht ein zentrisch und dicht durch den Deckel 12 hindurchgeführter Schlauch 15 ein, der außerhalb des Deckels 12 zur Förderung des Inhalts des Innengefäßes 14 an einen Verarbeitungsort führt.

An einer exzentrischen Stelle wird der Deckel 12 ferner von einer Zuführöffnung 16 zur Beaufschlagung des Behälterinnenraums mit einem Druckmedium durchsetzt. Bei dem Druckmedium kann es sich um Gas, insbesondere Luft, oder auch - je nach Anwendungszweck - um eine Flüssigkeit handeln. An einer weiteren Stelle des Deckels 12 ist ein Überdruckventil 17 angeordnet.

Die die Öffnung 11 umgebende obere Stirnfläche der Gefäßwandung ist mit einer im Querschnitt halbkreisförmigen Ringnut versehen, in die ein O-Ring 20 eingesetzt ist. Im Deckel 12 ist eine ringförmige Membran 21 mit einer mittleren Öffnung 22 angeordnet, die mit ihrem Außenrand in den zylindrischen Deckelflansch 13 dicht eingefügt ist. An ihrer Unterseite trägt die Membran 21 eine Ringscheibe 23, die im Bereich der gemeinsamen Öffnung 22 mit der Membran 21 verbunden ist. Die Ringscheibe 23 liegt mit ihrer unteren Fläche auf dem O-Ring 20 auf.

Zur Arretierung des Deckels 12 gegenüber dem Gefäß 10 dient ein Bajonettverschluß, der mindestens zwei, vorzugsweise drei, in Umfangsrichtung gleichmäßig angeordnete, aus der oberen Gefäßwand radial herausragende Stifte 24 aufweist. Jeder Stift 24 arbeitet mit einem generell L-förmigen Schlitz 25 im Deckelflansch 13 zusammen, dessen genaue Form in Figur 2 gezeigt ist.

Gemäß Figur 2 umfaßt der Schlitz 25 einen zum unteren Deckelrand offenen senkrechten Einführteil 26 und einen daran anschließenden waagerechten Verriegelungsteil 27. Die untere Kante des Verriegelungsteils 27 ist mit einem inneren Arretierbereich 28 und einem zwischen diesem und dem Einführteil 26 gelegenen Haltebereich 29 versehen. Der Arretierbereich 28 ist gegenüber dem Haltebereich 29 durch einen nach oben ragenden Vorsprung 30 der unteren Schlitzkante abgesetzt. In ähnlicher Weise ist der Haltebereich 29 gegenüber dem Einführteil 26 des Schlitzes 25 durch einen nach oben weisenden Vorsprung 31 begrenzt.

In Figur 2 sind ferner verschiedene Stellungen (A) bis (D) des Stiftes relativ zu dem Schlitz 25 dargestellt. Beim Aufsetzen des Deckels 12 auf das Gefäß 10 befindet sich der Stift zunächst in der Stellung (A). Wird der Deckel abgesenkt, so verschiebt sich der Stift in die Stellung (B). Durch anschließendes Drehen des Deckels 12 im Uhrzeigersinn (Bewegung des in Figur 2 gezeigten Deckelteils nach links) gelangt der Stift an das rechte Ende des Verriegelungsteils 27. Wird nun der Behälter mit dem Druckmedium beaufschlagt, so wird der Deckel 12 angehoben, und der Stift gelangt in die Stellung (C) in dem Arretierbereich 28. In dieser Stellung verhindert der Vorsprung 30 zusammen mit dem Innendruck des Behälters ein Öffnen des Deckels durch Drehen gegen den Uhrzeigersinn.

Wurde der Deckel 12 beim Schließen nicht weit genug verdreht, so wird der Stift bei der anschließenden Druckbeaufschlagung entweder durch die rechte Flanke des Vorsprungs 30 wiederum in die Stellung (C) im Arretierbereich 28 geführt, oder er gelangt in die Stellung (D) im Haltebereich 29. In diesem Bereich hat der Verriegelungsteil 27 des Schlitzes 25 eine so große Höhe, daß der Deckel 12 genügend weit angehoben werden kann, um die Dichtung freizugeben und das Druckmedium entweichen zu lassen.

Bei dieser Aufwärtsbewegung nimmt an der Innenseite des Deckelflansches 13 vorgesehene ringförmige Vorsprung 32 die Ringscheibe 23 mit und hebt sie zwangsläufig vom O-Ring 20 ab. Durch den Vorsprung 31 wird der Deckel 12 aber auch in dieser Stellung sicher gegen ein völliges Abheben gehalten.

Anstelle eines umlaufenden ringförmigen Vorsprungs 32 können auch einzelne nach innen ragende Nasen am Innenumfang des Deckels 12 vorgesehen sein.

Die in Figur 1 gezeigte und oben beschriebene Dichtung arbeitet so, daß bei aufgesetztem und voll arretiertem Deckel 12 sowie anschließender Druckbeaufschlagung an dem aus der Membran 21 und der Ringscheibe 23 bestehenden Bauteil eine Druckdifferenz wirksam wird, die die Membran 21 samt der Ringscheibe 23 nach unten gegen den O-Ring 20 drückt. Die Druckdifferenz ergibt sich daraus, daß die obere Fläche der Membran 21 in Radialrichtung über den Durchmesser des O-Rings 20 hinausragt. Dabei verformt sich die Membran 21 derart, daß sie sich mit Ausnahme ihres im Deckelflansch 13 eingespannten Randbereichs flach auf die Ringscheibe 23 legt gegenüber dieser abdichtet.

Ist die in der Membran 21 und der Ringscheibe 23 vorgesehene Öffnung 22 nicht allzu groß, so wird sich bei Druckbeaufschlagung durch die Zuführöffnung 16 hindurch der Druck zuerst in der zwischen der Oberseite der Membran 21 und der Unterseite des Deckels 12 gelegenen Kammer aufbauen, so daß der Deckel 12 angehoben und dadurch die Dichtung wirksam wird. Zur Unterstützung dieser Wirkung ist es günstig, wenn die Zuführöffnung 16 im Deckel 12 exzentrisch und damit außerhalb der in der Membran 21 vorgesehenen Öffnung 22 angeordnet ist.

Die Ringscheibe 23 ist nicht unbedingt erforderlich. Bei entsprechender Dimensionierung von Deckel 12 und Gefäß 10 sowie entsprechender Flexibilität der Membran 21 kann diese unmittelbar mit dem O-Ring 20 in Eingriff treten.

In der Variante nach Figur 3 besteht die Membran aus einer Ringscheibe 41 mit einer zentrischen Öffnung 42 und einem äußeren nach oben gerichteten Flansch 43. Zwischen diesem Flansch 43 und der zylindrischen Innenwand des Deckelflansches 13 sind zwei weitere O-Ringe 44 angeordnet, die die Ringscheibe 41 gegenüber dem Behälter 12 abdichten. Die Ringscheibe 41 ist ferner an der unteren Fläche des Deckels 12 über mehrere flexible Verbindungselemente 45 angebracht, die die Ringscheibe 41 unverlierbar halten aber ihre Bewegung relativ zu dem O-Ring 20 nicht behindern.

Im Gegensatz zu dem Ausführungsbeispiel nach Figur 1, in der sich bei Druckbeaufschlagung die Membran 21 verformt, findet bei der Gestaltung nach Figur 3 eine kolbenartige Verschiebung der Ringscheibe 41 statt.

Eine ähnliche kolbenartige Bewegung erfolgt auch bei der Gestaltung nach Figur 4, die sich von der Ausführungsform nach Figur 3 lediglich dadurch unterscheidet, daß die Ringscheibe 51 aus einer ebenen Scheibe mit mittlerer Öffnung 52 besteht und durch einen Balg 53, der ebenfalls eine zentrische Öffnung 54 aufweist, dicht mit dem Deckel 12 verbunden ist.

## Patentansprüche

1. Druckbehälter, umfassend
ein Gefäß (10) mit einem Deckel (12),
eine Dichtung mit einem an einem (10) dieser beiden Behälterteile (10, 12) angeordneten, die Öffnung (11) des Gefäßes (10) umgebenden Dichtungsring (20) und einem mit dem anderen Behälterteil (12) dicht verbundenen, dem Dichtungsring (20) gegenüberstehenden Ringelement (21, 23; 41; 51),
eine Einrichtung (24, 25) zum Arretieren des Deckels (12) gegenüber dem Gefäß (10) in einer ersten, undichten Stellung und in einer zweiten, dichten Schließstellung, und
eine Einrichtung (32), die in der ersten Stellung des Deckels (12) gegenüber dem Gefäß (10) die Dichtung (20, 21, 23; 20, 41; 20, 51) zwangs-geöffnet hält,
dadurch gekennzeichnet, daß das Ringelement (21, 23; 41; 51) an seiner von dem Dichtungsring (20) abgewandten Seite einen radial außerhalb des Dichtungsrings (20) gelegenen, dem Behälterinnendruck ausgesetzten Flächenbereich aufweist und durch den Behälterinnendruck relativ zum dem besagten anderen Behälterteil (12) in Eingriff mit dem Dichtungsring (20) bewegbar ist.

2. Druckbehälter nach Anspruch 1, dadurch gekennzeichnet, daß die Arretiereinrichtung einen an einem der beiden Behälterteile (10, 12) angeordneten, quer zur Öffnungsrichtung des Deckels (12) stehenden Stift (24) zum bajonettartigen Eingriff in einen am anderen Behälterteil (12) vorgesehenen, generell L-förmigen Schlitz (25) umfaßt, wobei die einem Abheben des Deckels (12) entgegengerichtete Innenkante des Schlitzes (25) einen dem Einführteil (26) des Schlitzes (25) benachbarten, die erste, undichte Stellung definierenden ersten Bereich (29) und einen von dem Einführteil (26) entfernten, die zweite, dichte Schließstellung definierenden zweiten Bereich (28) aufweist, und wobei der zweite Bereich (28) von dem ersten Bereich (29) durch einen Vorsprung (30) abgesetzt ist.

3. Druckbehälter nach Anspruch 2, dadurch gekennzeichnet, daß der erste Bereich (29) gegenüber dem Einführteil (26) des Schlitzes durch einen Vorsprung (31) begrenzt ist.

4. Druckbehälter nach einem der Ansprüche 1 bis 3, dadurch gekennzeichnet, daß das Ringelement (21, 23; 41; 51) mit dem Deckel (12) verbunden ist und die die Dichtung zwangs-öffnende Einrichtung einen am Deckel (12) vorgesehenen, das Ringelement (21, 23; 41; 51) hintergreifenden Vorsprung (32) aufweist, der in der ersten, undichten Stellung des Deckels (12) gegenüber dem Gefäß (10) das Ringelement (21, 23; 41; 51) von dem Dichtungsring (20) abhebt.

5. Druckbehälter nach einem der Ansprüche 1 bis 4, dadurch gekennzeichnet, daß das Ringelement (21, 23) eine mit ihrem Außenrand in die Umfangswand des anderen Behälterteils (12) eingefügte Membran (21) aufweist.

6. Druckbehälter nach Anspruch 5, dadurch gekennzeichnet, daß die Membran (21) mit einer den Dichtungsring (20) beaufschlagenden Ringscheibe (23) verbunden ist.

7. Druckbehälter nach einem der Ansprüche 1 bis 4, dadurch gekennzeichnet, daß das Ringelement (41) einen zur Umfangswand des anderen Behälterteils (12) parallelen Flansch (43) aufweist und zwischen diesem und der Umfangswand eine weitere Dichtung (44) vorgesehen ist.

8. Druckbehälter nach einem der Ansprüche 1 bis 4, dadurch gekennzeichnet, daß das Ringelement (51) gegenüber dem anderen Behälterteil (12) durch einen Balg (53) abgedichtet ist.

9. Druckbehälter nach einem der Ansprüche 1 bis 8, dadurch gekennzeichnet, daß das Ringelement (21, 23; 41; 51) mit dem Deckel (12) verbunden ist und die Druckzufuhr durch den Deckel (12) erfolgt.

## Claims

1. A pressure container comprising
a vessel (10) having a cover (12),
a seal including a sealing ring (20) disposed on one (10) of these two container portions (10, 12) and surrounding the opening (11) of the vessel (10), and an annular member (21, 23; 41; 51) tightly connected to the other container portion (12) and facing the sealing ring (20),
means (24, 25) for locking the cover (12) with respect to the vessel (10) in a first, non-sealed position and in a second, sealed closing position, and
means (32) for forcibly maintaining the seal (20, 21, 23; 20, 41; 20, 51) in an open condition when the cover (12) is in the first position with respect to the vessel (10),
**characterised** in that the annular member (21, 23; 41; 51), at its side facing away from the sealing ring (20), has a surface portion situated radially outside the sealing ring (20), exposed to the internal pressure of the vessel, and being movable relatively to said other container portion (12) into engagement with the sealing ring (20) by the internal pressure of the vessel.

2. The pressure container of claim 1, characterised in that the locking means includes a peg (24) disposed on one of the two container portions (10, 12) and extending transversely of the opening direction of the cover (12) for bayonet-like engagement with a generally L-shaped slot (25) provided in the other container portion (12), wherein the inner edge of the slot (25), which opposes the cover (12) being lifted off, has a first region (29) adjacent the entry portion (26) of the slot (25) and defining the first, non-sealed position, and a second region (28) remote from said entry portion (26) and defining the second, sealed closing position, and wherein the second region (28) is offset from the first region (29) by a projection (30).

3. The pressure container of claim 2, characterised in that the first region (29) is limited from the entry portion (26) of the slot by a projection (31).

4. The pressure container of any of claims 1 to 3, characterised in that the annular element (21, 23; 41; 51) is connected to the cover (12), and the means which forcibly maintains the seal in an open condition includes a projection (32) provided on the cover (12) and engaging behind the annular element (21, 23; 41; 51) for lifting the annular element (21, 23; 41; 51) off the sealing ring (20) when the cover (12) is in the first, non-sealed position with respect to the vessel (10).

5. The pressure container of any of claims 1 to 4, characterised in that the annular element (21, 23) includes a diaphragm (21) which has its outer rim inserted in a peripheral wall of the other container portion (12).

6. The pressure container of claim 5, characterised in that the diaphragm (21) is connected to an annular disc (23) which engages the sealing ring (20).

7. The pressure container of any of claims 1 to 4, characterised in that the annular element (41) has a flange (43) extending parallel to the peripheral wall of the other container portion (12), with a further seal (44) provided between the flange and the peripheral wall.

8. The pressure container of claim 1, characterised in that the annular element (51) is sealed with respect to the other container portion (12) by a bellow (53).

9. The pressure container of any of claims 1 to 8, characterised in that the annular element (21, 23; 41; 51) is connected to the cover (12) and pressure is admitted through the cover (12).

## Revendications

1. Conteneur sous pression, comprenant un récipient (10) muni d'un couvercle (12),
une garniture d'étanchéité comportant une bague d'étanchéité (20), qui entoure l'ouverture (11) du récipient (10) et qui est disposée sur l'une (10) des deux parties de conteneur (10,12), et comprenant un élément annulaire (21, 23 ; 41 ; 51) qui fait face à la bague d'étanchéité (20) et qui est relié, de manière étanche, à l'autre partie de conteneur (12),
un dispositif (24, 25) pour le blocage du couvercle (12) vis-à-vis du récipient (10) dans une première position non étanche et dans une seconde position étanche de fermeture,
un dispositif (32) qui maintient, en ouverture forcée, la garniture d'étanchéité (20, 21, 23; 20, 41 ; 20, 51) dans la première position du couvercle (12) vis-à-vis du récipient (10),
caractérisé en ce que l'élément annulaire (21, 23 ; 41 ; 51) présente, sur sa face détournée de la bague d'étanchéité (20), une zone de surface qui se trouve radialement à l'extérieur de la bague d'étanchéité (20) et qui est exposée à la pression interne du conteneur et est mobile, sous l'action de la pression interne du conteneur, par rapport à ladite autre partie de conteneur (12), en étant en contact avec la bague d'étanchéité (20).

2. Conteneur sous pression, selon la revendication 1, caractérisé en ce que le dispositif de blocage comprend une tige (24), disposée sur l'une des deux parties de conteneur (10, 12) et placée transversalement au sens d'ouverture du couvercle (12), afin de réaliser un engagement du type baïonnette dans une fente (25), généralement en forme de L et prévue sur l'autre partie de conteneur (12), le bord interne de la fente (25), qui est dirigé à l'encontre d'un soulèvement du couvercle (12), présentant une première zone (29) qui est à proximité de la partie d'insertion (26) de la fente (25) et qui définit la première position non étanche, et une seconde zone (28) qui définit la seconde position de fermeture étanche et qui est éloignée de la partie d'insertion (26), la seconde zone (28) étant séparée de la première zone (29) par une saillie (30).

3. Conteneur sous pression selon la revendication 2, caractérisé en ce que la première zone (29) est limitée vis-à-vis de la partie d'insertion (26) de la fente par une saillie (31).

4. Conteneur sous pression selon l'une des revendications 1 à 3, caractérisé en ce que l'élément annulaire (21, 23 ; 41 ; 51) est relié au couvercle (12) et en ce que le dispositif d'ouverture forcée de la garniture d'étanchéité présente une saillie (32) qui est prévue sur le couvercle (12), qui entre en contact avec l'élément annulaire (21, 23 ; 41 ; 51) par l'arrière et qui soulève, de la bague d'étanchéité (20), l'élément annulaire (21, 23 ; 41 ; 51) vis-à-vis du récipient (10) quand le couvercle (12) est en première position non étanche.

5. Conteneur sous pression selon l'une des revendications 1 à 3, caractérisé en ce que l'élément annulaire (21, 23) présente une membrane (21) introduite par son bord externe dans la paroi périphérique de l'autre partie de conteneur (12).

6. Conteneur sous pression selon la revendication 5, caractérisé en ce que la membrane (21) est reliée à une rondelle (23) sollicitant la bague d'étanchéité (20).

7. Conteneur sous pression selon l'une des revendications 1 à 4, caractérisé en ce que l'élément annulaire (41) présente une bride (43) parallèle à la paroi périphérique de l'autre partie de conteneur(12) et qu'il est prévu, entre la bride et la paroi périphérique, une autre garniture d'étanchéité (44).

8. Conteneur sous pression selon l'une des revendications 1 à 4, caractérisé en ce que l'élément annulaire (51) est rendu étanche vis-à-vis de l'autre partie de conteneur (12) par un soufflet (53).

9. Conteneur sous pression selon l'une des revendications 1 à 3, caractérisé en ce que l'élément annulaire (21, 23 ; 41 ; 51) est relié au couvercle (12) et en ce que l'arrivée de pression s'effectue par le couvercle (12).
